(19) **Europäisches Patentamt / European Patent Office / Office européen des brevets**

(11) **EP 2 827 516 B1**

(12) **EUROPEAN PATENT SPECIFICATION**

(45) Date of publication and mention of the grant of the patent:
**23.03.2016 Bulletin 2016/12**

(21) Application number: **12874880.3**

(22) Date of filing: **25.06.2012**

(51) Int Cl.:
*H04J 13/10* (2011.01)   *H04B 1/7075* (2011.01)

(86) International application number:
**PCT/CN2012/077421**

(87) International publication number:
**WO 2013/155785 (24.10.2013 Gazette 2013/43)**

(54) **SCRAMBLING CODE GENERATION METHOD, APPARATUS AND SCRAMBLING CODE PROCESSING APPARATUS**

VERFAHREN UND VORRICHTUNG ZUR ERZEUGUNG EINES VERSCHLÜSSELUNGSCODES UND VORRICHTUNG ZUR VERARBEITUNG EINES VERSCHLÜSSELUNGSCODES

PROCÉDÉ ET APPAREIL DE GÉNÉRATION DE CODE DE BROUILLAGE, ET APPAREIL DE TRAITEMENT DE CODE DE BROUILLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2012   CN 201210114003**

(43) Date of publication of application:
**21.01.2015 Bulletin 2015/04**

(73) Proprietors:
- **ZTE Corporation**
  **Shenzhen, Guangdong 518057 (CN)**
- **ZTE Microelectronics Technology Co., Ltd.**
  **Shenzhen (CN)**

(72) Inventors:
- **HONG, Sihua**
  **Shenzhen**
  **Guangdong 518057 (CN)**

- **FENG, Liguo**
  **Shenzhen**
  **Guangdong 518057 (CN)**
- **XU, Hongbo**
  **Shenzhen**
  **Guangdong 518057 (CN)**
- **CHEN, Xu**
  **Shenzhen**
  **Guangdong 518057 (CN)**

(74) Representative: **Benson, Christopher et al**
**HGF Limited**
**4th Floor, Merchant Exchange**
**17-19 Whitworth Street West**
**Manchester M1 5WG (GB)**

(56) References cited:
| | |
|---|---|
| EP-A2- 1 055 996 | WO-A1-2007/094775 |
| CN-A- 101 072 098 | CN-A- 101 098 162 |
| CN-A- 101 098 325 | CN-A- 101 821 977 |

**Description**

Technical Field

The present invention relates to the field of mobile communications, and more particularly, to a scrambling code generation method, apparatus and a scrambling code processing apparatus.

Background of the Related Art

In wireless communication systems such as the wideband code division multiple access (WCDMA), in order to cancel the interference, a pseudo-random code is used to encrypt the signal, that is, scramble the spreading signal. When a transmitter transmits signals, the scrambling code and the significant signal are mixed by a scrambling code generator, and then transmitted out. When receiving the signal, the receiver performs correlation processing on the scrambling code and the received signal through the scrambling code generator, and decodes out the significant signal. The scrambling and descrambling methods are used to achieve signal protection.

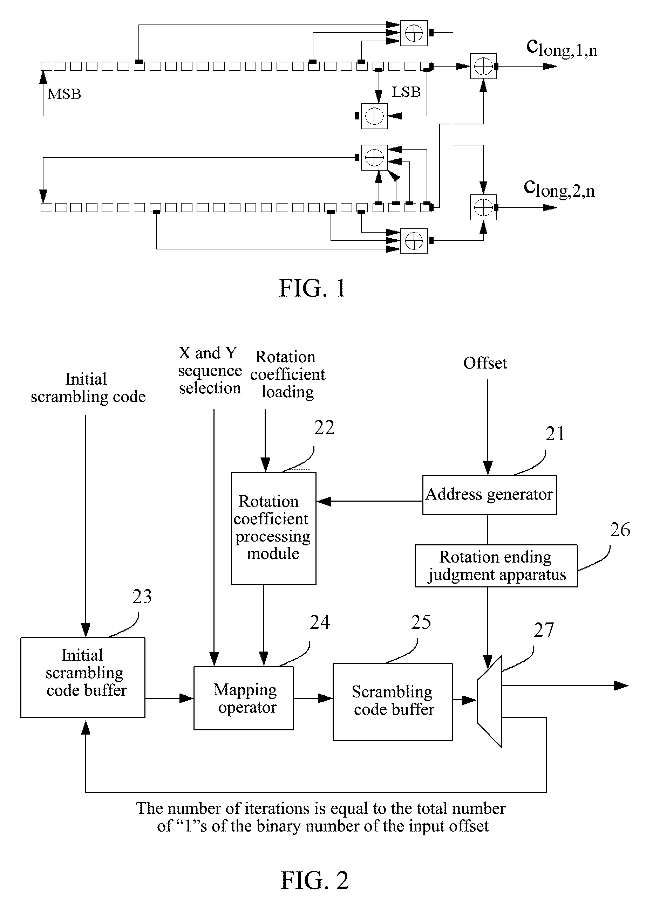

Third Generation Partnership Project (3GPP) TS 25.213 protocol introduces the scrambling code generation and its phase offset method, as shown in FIG. 1, which is mainly constructed by calculating the X and Y two sequences according to certain rules. X consists of a shift register constructed by the small box in the upper part of FIG. 1 and the corresponding feedback circuit, and the deducing formula is:

$$x_n(i+25) = x_n(i+3) + x_n(i) \text{ modulo } 2, i=0,\ldots, 2^{25}\text{-}27$$

Y consists of the shift register constructed by the small box in the lower part of FIG. 1 and the corresponding feedback circuit, and the deducing formula is:

$$y(i+25) = y(i+3)+y(i+2)+y(i+1)+y(i) \quad \text{modulo } 2, i=0,\ldots, 2^{25}\text{-}27$$

The outputs $c_{long,1,n}(i)$ and $c_{long,2,n}(i)$ in FIG. 1 finally constitute the WCDMA complex scrambling code:

$$C_{long,n}(i) = c_{long,1,n}(i)\left(1 + j(-1)^i c_{long,2,n}\left(2\lfloor i/2 \rfloor\right)\right)$$

As shown in FIG. 1, each complex scrambling code is obtained by mapping the 25-bit X and Y sequences with a fixed combinational circuit. According to the circuit included in the protocol, X and Y can offset by one chip in each clock cycle, and the output scrambling code can have one chip offset. If there are N offsets, it needs to wait for N clock cycles to generate the scrambling code, and when the scrambling code offsets in the N clock cycles, the scrambling code generation apparatus have to be occupied consistently. The scrambling code generator recommended in the protocol is suitable for the case that the scrambling codes offset consistently.

In wireless communications, there are many occasions that need to use discontinuous offset of the scrambling codes. For example, in the RAKE receiver in the WCDMA, due to the multipath update and the user's own movement, the multipath phase of each user shifts constantly, therefore the receiver needs to keep adjusting the phase generated by the scrambling code according to the input phase offset, and usually the phase offset N between the scrambling code that needs to be generated next and the previous scrambling code is not equal to 1. When performing N-bit offset, one method is to control the scrambling code generator to generate bit by bit. When N is a positive integer, it needs to wait for N clock cycles to perform phase offset, when N is a negative integer, it needs to wait for N clock cycles until the input offset and the scrambling code offset are equal. It takes a lot of time, and the scrambling code generator is occupied for a long time just for the offset.

In wireless interference cancellation, currently the users are grouped and processed in batches, each user performs reconstruction and cancellation according to the reconstruction length (the reconstruction length is not specified in the protocol and can have different values corresponding to different algorithms, and it is specified as 512 here), therefore the minimum scrambling code offset is 512chip. The interference cancellation, however, has very high requirements on the time performance, and it takes a long time to generate the scrambling code and is not easy to improve the interference cancellation performance when the scrambling code generator specified in the protocol is used. While, the matrix multiplication method can be used to generate transformation matrix of each set of slot boundaries slot0, slot1,

2

slot2, and so on according to the wireless frame structure and the slot serial number, and generate the transformation matrix of each set of symbol boundaries symbol0, symbol1, symbol2, and so on, according to the symbol serial number. It needs to store a large number of transformation matrix coefficients (at least 50 sets of 25*25 matrix coefficients), which requires a lot of storage space.

The prior art document EP 1 055 996 A2 shows a method for updating a linear feedback shift register of code generator.

The scrambling code generator that generates the scrambling code bit by bit has a simple structure but poor performance. It gradually cannot satisfy the increasingly complicated RAKE receiver and the interference cancellation processing. Matrix multiplication requires storing a large amount of transformation matrixes, thus the overhead is relatively large, moreover the matrix algorithm is relatively complicated, and the matrix operation is related to the stored transformation matrices, if the algorithm changes, the reconstruction length of the interference cancellation changes and is irregular, the existing matrix multiplication will be largely restricted. The matrix coefficients required to be stored might be expanded rapidly.

Summary of the Invention

The embodiment of the present invention provides a scrambling code generation method, apparatus and a scrambling code processing apparatus, to overcome the problem in the prior art that the single-bit rotation performance is relatively poor, the matrix storage resource consumption is excessive, and the matrix multiplication is not flexible.

The embodiment of the present invention provides a scrambling code generation method, and the method comprises:

transforming an input phase offset into a binary number, generating an access address of a rotation coefficient according to a position of a significant bit with a maximum weight in the binary number, and selecting a corresponding rotation coefficient from a rotation coefficient table based on the access address;

mapping a K-bit initial scrambling code sequence onto a 2K-bit scrambling code sequence, calculating the mapped scrambling code sequence with the rotation coefficient to obtain a rotated scrambling code sequence, wherein K is a positive integer;

updating the significant bit currently with the maximum weight to zero, if an updated phase offset is zero, outputting the rotated scrambling code sequence, if the updated phase offset is not zero, taking the updated phase offset as a current input phase offset, and taking the rotated scrambling code sequence as the initial scrambling code sequence and repeating the abovementioned procedures.

Preferably, before selecting the corresponding rotation coefficient from the rotation coefficient table according to the address, the method further comprises:

deriving a rotation coefficient of a scrambling code by n-th power of 2, and storing the rotation coefficient into the rotation coefficient table.

Preferably, calculating the mapped scrambling code sequence with the rotation coefficient to obtain a rotated scrambling code sequence, comprising:

dividing the mapped 2K-bit scrambling sequence into K sets, and the K sets of scrambling code sequences are multiplied and added with the rotation coefficient to obtain the rotated scrambling sequence.

Preferably, the K is preferably 25.

The embodiment of the present invention further provides a scrambling code generation apparatus, and the apparatus comprises:

an address generator, which is configured to: generate an access address of a rotation coefficient in accordance with a position of a significant bit currently with a maximum weight in a binary number transformed from a current phase offset;

a rotation coefficient processing module, which is configured to: store a rotation coefficient table containing the rotation coefficients, and select a corresponding rotation coefficient from the rotation coefficient table according to the access address generated by the address generator to output;

an initial scrambling code buffer, which is configured to: buffer an initial scrambling code sequence and a rotated scrambling code sequence;

a mapping operator, which is configured to: map a K-bit initial scrambling code sequence buffered in the initial scrambling code buffer onto a 2K-bit scrambling code sequence, calculate the mapped scrambling code sequence with the rotation coefficient output by the rotation coefficient processing module to obtain a rotated scrambling code sequence to output, wherein K is a positive integer;

a scrambling code buffer, which is configured to: buffer the rotated scrambling code sequence output by the mapping operator;

a rotation ending judgment module, which is configured to: judge whether a number of times of accessing the rotation coefficient processing module reaches a number of non-zero bits in a binary number transformed from a first input phase offset or not, if not reaching, output a first predetermined value to a selector; if reaching, output a second predetermined value to the selector;

the selector, which is configured to: receive the first predetermined value input by the rotation ending judgment module, and output the rotated scrambling code sequence coming from the scrambling code buffer to the initial scrambling code buffer according to the first predetermined value; or, receive the second predetermined value input by the rotating ending judgment module, and output the rotated scrambling code sequence coming from the scrambling code buffer according to the second predetermined value.

Preferably, the rotation coefficient is a rotation coefficient derived by n-th power of 2.

Preferably, K is preferably 25.

Preferably, a number of the rotation coefficients stored in the rotation coefficient table is determined according to a maximum number of bits of the phase offset.

The embodiment of the present invention further provides a scrambling code processing apparatus, comprising the abovementioned scrambling code generation apparatus, a branch selector connected with the scrambling code generation apparatus and a protocol scrambling code generator connected with the branch selector.

Preferably, when the protocol scrambling code generator is an interference cancellation scrambling code generator, a forward rotation coefficient is used as the rotation coefficient.

The abovementioned scrambling code generation method, apparatus and the scrambling code processing apparatus improve performance and flexibility, and have relatively low cost.

Brief Description of Drawings

FIG. 1 is a schematic diagram of an existing protocol scrambling code structure;

FIG. 2 is a structural diagram of an embodiment of the scrambling code generation apparatus in accordance with the present invention;

FIG. 3 is a structural diagram of an embodiment of the scrambling code processing apparatus in accordance with the present invention;

FIG. 4 is a schematic diagram of the scrambling code mapping structure in accordance with the embodiment of the present invention;

FIG. 5 is a schematic diagram of the scrambling code operation structure in accordance with the embodiment of the present invention.

Preferred Embodiments of the Present Invention

Hereinafter, the embodiments of the present invention will be described in detail with combination of the accompanying drawings. It should be noted that, in the case of no conflict, the embodiments and features in the embodiments of the present application might be arbitrarily combined with each other.

FIG. 2 shows a structural diagram of the embodiment of the scrambling code generation apparatus in accordance with the present invention, and the apparatus comprises:

an address generator 21, a rotation coefficient processing module 22, an initial scrambling code buffer 23, a mapping operator 24, a scrambling code buffer 25, a rotation ending judgment apparatus 26 and a selector 27, wherein:

the address generator is used to generate the access address of the rotation coefficient according to the position of the significant bit currently with the maximum weight in the binary number transformed from the current phase offset;

the rotation coefficient processing module is used to store the rotation coefficient table containing the rotation coefficients, and select the corresponding rotation coefficient from the rotation coefficient table according to the access address generated by the address generator and output it;

the initial scrambling code buffer is used to buffer the initial scrambling code sequence and the rotated scrambling code sequence;

the mapping operator is used to map a K-bit initial scrambling code sequence buffered in the initial scrambling code buffer onto a 2K-bit scrambling code sequence, calculate the mapped scrambling code sequence with the rotation coefficient output by the rotation coefficient processing module to obtain a rotated scrambling code sequence, and output it;

the scrambling code buffer is used to buffer the rotated scrambling code sequence output by the mapping operator;

the rotation ending judgment module is used to judge whether the number of times of accessing the rotation coefficient processing module reaches the number of non-zero bits in the binary number transformed from the first input phase offset or not, if not reaching, output a first predetermined value to the selector; if reaching, output a second predetermined value to the selector;

the selector is used to receive the first predetermined value input by the rotation ending judgment module, and output the rotated scrambling code sequence coming from the scrambling code buffer to the initial scrambling code buffer according to the first predetermined value; or, receive the second predetermined value input by the rotating ending judgment module, and output the rotated scrambling code sequence coming from the scrambling code buffer according to the second predetermined value.

Wherein, the abovementioned first predetermined value may be set as 0, and the abovementioned second predetermined value may be set as 1, of course, the abovementioned first predetermined value may be set as 1, and the abovementioned second predetermined value may be set as 0, and so on; the abovementioned mapping operator is mainly used to perform two parts: mapping and calculating:

the first part is mapping, that is, mapping the 25 scrambling codes offsetting backward from the current scrambling codes, mainly constructed by some XOR units. The bits of the mapped scrambling code sequence extend from 25bits to 50 bits, and those 50 bits can be divided into 25 sets of scrambling code sequences. 0th-24th bits are the first set of scrambling code sequence, 1st to 25th bits are the second set of scrambling code sequence, ......, and 25th-49th bits are the last set of scrambling code sequence.

The other part is scrambling code operation, that is, multiplying and adding the mapped 25 sets of scrambling code sequences with the same rotation coefficient to generate an intermittent scrambling code sequence. Each set of scrambling code sequence is 25 bits, and the rotation coefficient is also 25 bits, their bits are one by one multiplied correspondingly, all 25 sets are multiplied and then added to obtain a new one-bit data. The 25 sets of scrambling codes can get a new 25-bit data, and this new 25-bit data is the scrambling code sequence value after one deflection.

The rotation coefficient table is used to store the prepared coefficient table corresponding to the n-th power of 2. Contents in the table are as follows:

```
0_0000_0000_0000_0000_0000_0010
0_0000_0000_0000_0000_0000_0100
0_0000_0000_0000_0000_0001_0000
0_0000_0000_0000_0001_0000_0000
0_0000_0001_0000_0000_0000_0000
```

(continued)

0_0000_0000_0000_0100_1000_0000
0_0001_0000_0000_0000_1000_0000
0_0000_0000_1000_0000_1100_1000

..............................................

the rotation ending judgment apparatus is used to judge the number of scrambling code deflection operations. If the number of bits whose binary offset is 1 is x, the number of scrambling rotation operations is x. The operation mechanism first primarily stores the access address of the table according to the most significant bit, and then erases the most significant bit. At this time, the second most significant bit becomes the most significant bit, and the new address corresponding to the n-th power of 2 transformation table corresponding to the next calculation is generated. When the offset change is zero, it represents that the scrambling code rotation operation ends.

The offset scrambling code buffer is used to store an updated scrambling code value after one rotation. If that operation is the last operation, that buffer sends the code to the protocol scrambling code generator; otherwise, it is input to the initial scrambling code buffer for the next operation.

The method applied in the scrambling code generation apparatus comprises the following steps:

in step one, the prepared rotation coefficients are stored in an internal register to buffer;

these rotation coefficients are obtained by rotating the calculated and stored coefficients by n-th power of 2. The reason for using such kind of rotation coefficients instead of the rotation coefficients with frame structure is primarily for flexibility, if subsequently the protocol frame structure changes, the impact on the scrambling code generation apparatus is relatively small. Even the interference cancellation algorithm changes and the reconstruction length is irregular, it does not have an impact on the scrambling code generation apparatus in the present invention.

In Step two, the output scrambling code offset phase is transformed into a binary number, the total number of "1" bits is calculated, and the time overhead of the scrambling code rotation is determined;

In step three, the position of the "1" bit with the maximum weight is determined according to the binary scrambling offset value, the corresponding address is generated, it is to search for the corresponding offset coefficient to send to the mapping operator for operations;

the searching rule is as follows, that is, if it is a positive offset of the X sequence, the generated address is equivalent to the value corresponding to the position of the most significant bit. If it is a positive offset of the Y sequence, the generated address is the value corresponding to the position of the most significant bit plus a constant A. Wherein A may be planned according to the arrangement of the specific coefficient table RAM.

In Step four, it is to map the taken-out 25-bit initial scrambling code through the map circuit onto a 50-bit initial scrambling code which can be combined into 25 sets of scrambling codes;

For the WCDMA system, a 25-bit initial scrambling code is used, and for other systems, initial scrambling code with another number of bits may be used.

In Step five, the binarized scrambling offset value is updated, and the bit "1" with the maximum weight is changed to "0";

In step six, it is to perform parallel multiplying and adding operations on the 50-bit initial scrambling code and the input rotation coefficients;

In step seven, it is to buffer the scrambling code operation result; judge whether the updated scrambling code offset value is zero or not, if it is zero, end the scrambling code rotation, and output the operation result; otherwise, proceed to step three.

In the abovementioned step one, the number of stored rotation coefficients is mainly determined according to the maximum number of bits of the scrambling code phase offset. In the interference cancellation, it is to scramble the maximum offset into one frame, and there is only the positive phase offset, therefore it only needs to store 16 rotation coefficients to support any offset in one frame. Moreover, the minimum unit of the offset of the current interference cancellation is 512, thus the number of rotation coefficients can be compressed as seven.

There are a variety of methods for taking the rotation coefficients in step three. The main idea is to select the corresponding rotation coefficients according to the positions of the non-zero bits; after selecting the coefficients, it is to identify the corresponding non-zero bits, and wait for the subsequent removal. For the non-zero coefficients, the operations can be carried out according to the weights in a descending or ascending order without affecting the overall performance.

The method for mapping the rotation coefficients in the abovementioned step four is mainly related to the characteristics of the scrambling codes. The scrambling codes generated in the present invention are primarily the scrambling codes specified in the protocol 3GPP TS 25.213. Depending on the different characteristics of the X and Y sequences, there are different mapping structures. The Y sequence is an extension of the X sequence, and these two sequences can use the same mapping circuit, as long as the configurations are different.

In the abovementioned step six, the initial scrambling code is mapped by 25, the reason for using the initial scrambling code instead of the rotation coefficients to map by 25 is that: mapping the initial scrambling code by 25 can reduce the number of stages in the combinational logic, which is easy to increase the circuit frequency, and moreover the circuit structure is relatively simple. The mapped scrambling codes and the same rotation coefficient are added to quickly obtain a new complete scrambling code.

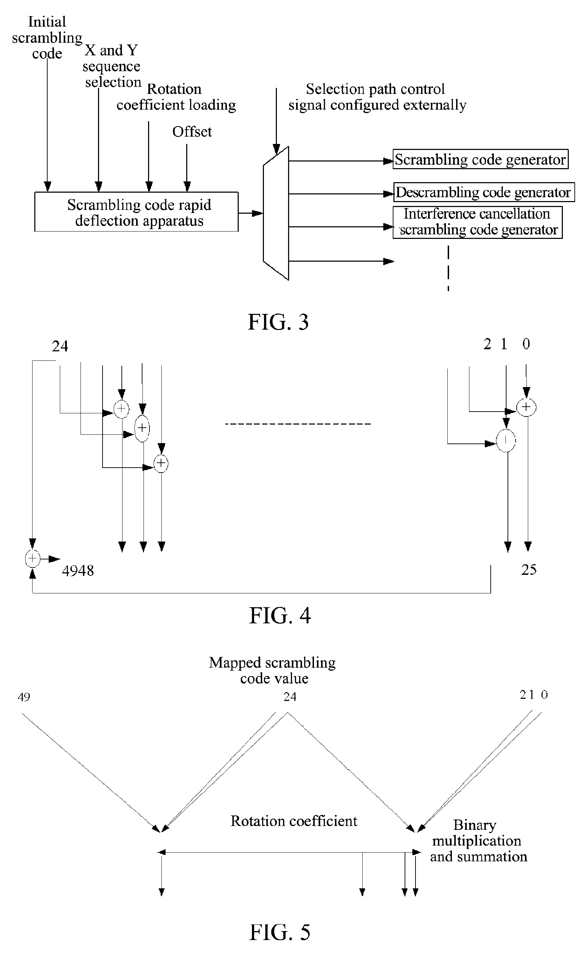

Furthermore, the present invention also provides a scrambling code processing apparatus, as shown in FIG. 3, the processing apparatus comprises a scrambling code generation apparatus shown in FIG. 2, a branch selector connected with the scrambling code generation apparatus, and a protocol scrambling code generator connected with the branch selector, and the protocol scrambling code generator comprises a scrambling code generator, a descrambling code generator and an interference cancellation scrambling code generator.

Wherein, the iteration operation can be performed on the pre-generated scrambling code rotation coefficients according to the scrambling code generation formula to obtain the change coefficient corresponding to the position of n-th power of 2. Wherein, X and Y are different, the forward and backward are different, and which type of the rotation coefficients may be used depends on practical situations. For example, the interference cancellation only needs to use the forward rotation coefficients; therefore there is no need to generate the backward rotation coefficients, which saves space.

Any scrambling offset can be decomposed as a sum of several n-th powers of 2. Such as 11001, it can be decomposed as a sum of one $4^{th}$ power of 2, one $3^{rd}$ power of 2, and one $0^{th}$ power of 2. The offset of each n-th power of 2 can be calculated completely in one clock cycle. Therefore, for an offset with any value, the time overhead needed to complete the scrambling code offset is equal to the number of non-zero bits after the offset is binarized. Moreover, the cycle recursive method can be used to split one offset into several integral powers of 2. First, the position of the most significant bit is determined to generate one rotation operation, and after the operation, the highest significant bit is removed. Then, it is to search for the most significant bit in the updated offset, and implement a new scrambling code rotation according to the new most significant bit, and update the phase offset again after the operation, until the last phase offset is zero, which represents that the scrambling code operation ends.

The structure of mapping the 25-bit scrambling code to a 50-bit scrambling code is shown in FIG. 4, and FIG. 4 only lists the mapping relationship of the X sequence, the Y sequence mapping structure is similar. The values of the $25^{th}$-$46^{th}$ bits are calculated primarily according to the scrambling code recursive formula, and each operation only has one stage of XOR gate. When calculating the values of the $47^{th}$-$49^{th}$ bits, it requires two stages of XOR gates, the combinational logic stage is simple, which is suitable for integrated circuits with increasingly high frequencies.

After mapping the 50-bit scrambling code, the scrambling code is divided into 25 sets by taking 25bits as the unit, as shown in FIG. 5, wherein $0^{th}$-$24^{th}$ is one set, $1^{st}$-$25^{th}$ is one set, and so on. Then the 25 sets of scrambling codes are respectively multiplied with the input rotation coefficients and then summed up, wherein, when summing up, they can be grouped in pairs and summed up in parallel, for example, bit 0 and bit 1 are summed up, meanwhile bit 2 and bit 3 are summed up, and then the summed-up results are summed up again, thus the number of the combinatorial logic stages can be reduced by half.

Finally, after the scrambling code sequence rotation completes, the generated scrambling code sequence is transported to the protocol scrambling code generator. Based on the normal operation, the scrambling code generation requires only a single bit rotation. Therefore, the abovementioned scrambling code processing apparatus has relatively high performance and also relatively high cost performance.

In summary, the abovementioned scrambling code generation method, apparatus and the scrambling code processing apparatus achieve rapid rotations of the scrambling codes, the time for rotations is only related to the number of the non-zero binaries of the phase offset, and the processing performance is the best in the known scrambling code rotation methods. Moreover, the use of the scrambling code generator is flexible and has wide adaptability, and it can adapt to an arbitrary phase offset and is slightly affected by the specific wireless frame structure. The area of the internal storage unit is small, and it only needs to store a small amount of rotation coefficients rather than a large mount of sets of change matrices, which greatly reduces the storage space.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Optionally, all or some of the steps of the abovementioned embodiments may also be implemented by using one or more integrated circuits. Accordingly, each apparatus/module/unit in the abovementioned embodiments may be realized in the form of hardware or software function module. The present invention is not limited to any specific form of hardware and software combinations.

The above embodiments are only used to illustrate, rather than limit, the technical schemes of the present invention, and the present invention is illustrated in detail only with reference of the preferred embodiments.

Industrial Applicability

The abovementioned scrambling code generation method, apparatus and the scrambling code processing apparatus improve performance and flexibility, and have relatively low cost.

**Claims**

1. A scrambling code generation method, comprising:

   transforming an input phase offset into a binary number, generating an access address of a rotation coefficient according to a position of a significant bit with a maximum weight in the binary number, and selecting a corresponding rotation coefficient from a rotation coefficient table based on the access address;
   mapping a K-bit initial scrambling code sequence onto a 2K-bit scrambling code sequence, calculating the mapped scrambling code sequence with the rotation coefficient to obtain a rotated scrambling code sequence, wherein K is a positive integer;
   updating the significant bit currently with the maximum weight to zero, if an updated phase offset is zero, outputting the rotated scrambling code sequence, if the updated phase offset is not zero, taking the updated phase offset as a current input phase offset, and taking the rotated scrambling code sequence as the initial scrambling code sequence and repeating the abovementioned procedures.

2. The method of claim 1, wherein,
   before selecting the corresponding rotation coefficient from the rotation coefficient table according to the address, the method further comprises:

   deriving a rotation coefficient of the scrambling code by n-th power of 2, and storing the rotation coefficient into the rotation coefficient table.

3. The method of claim 1, wherein,
   calculating the mapped scrambling code sequence with the rotation coefficient to obtain a rotated scrambling code sequence, comprises:

   dividing the mapped 2K-bit scrambling sequence into K sets, and multiplying and adding the K sets of scrambling code sequences with the rotation coefficient to obtain a rotated scrambling sequence.

4. The method of any one of claims 1~3, wherein,
   said K is preferably 25.

5. A scrambling code generation apparatus, comprising:

   an address generator, which is configured to: generate an access address of a rotation coefficient in accordance with a position of a significant bit currently with a maximum weight in a binary number transformed from a current phase offset;
   a rotation coefficient processing module, which is configured to: store a rotation coefficient table containing rotation coefficients, and select a corresponding rotation coefficient from the rotation coefficient table according to the access address generated by the address generator to output;
   an initial scrambling code buffer, which is configured to: buffer an initial scrambling code sequence and a rotated scrambling code sequence;
   a mapping operator, which is configured to: map a K-bit initial scrambling code sequence buffered in the initial scrambling code buffer onto a 2K-bit scrambling code sequence, calculate the mapped scrambling code sequence with the rotation coefficient output by the rotation coefficient processing module to obtain a rotated scrambling code sequence to output, wherein K is a positive integer;
   a scrambling code buffer, which is configured to: buffer the rotated scrambling code sequence output by the mapping operator;
   a rotation ending judgment module, which is configured to: judge whether a number of times of accessing the rotation coefficient processing module reaches a number of non-zero bits in a binary number transformed from a first input phase offset or not, if not reaching, output a first predetermined value to a selector; if reaching, output a second predetermined value to the selector;

a selector, which is configured to: receive the first predetermined value input by the rotation ending judgment module, and output the rotated scrambling code sequence coming from the scrambling code buffer to the initial scrambling code buffer according to the first predetermined value; or, receive the second predetermined value input by the rotating ending judgment module, and output the rotated scrambling code sequence coming from the scrambling code buffer according to the second predetermined value.

6. The apparatus of claim 5, wherein,
   the rotation coefficient is a rotation coefficient derived by n-th power of 2.

7. The apparatus of claim 5, wherein,
   said K is preferably 25.

8. The apparatus of claim 5, wherein,
   a number of the rotation coefficients stored in the rotation coefficient table is determined according to a maximum number of bits of the phase offset.

9. A scrambling code processing apparatus, comprising a scrambling code generation apparatus, a branch selector connected with the scrambling code generation apparatus and a protocol scrambling code generator connected with the branch selector, wherein,
   the scrambling code generation apparatus uses the apparatus of any one of claims 5~8.

10. The apparatus of claim 9, wherein,
    when the protocol scrambling code generator is an interference cancellation scrambling code generator, a forward rotation coefficient is used as the rotation coefficient.


**Patentansprüche**

1. Verfahren zur Erzeugung eines Verschlüsselungscodes, umfassend:

   Umwandeln einer Eingangsphasenverschiebung in eine Binärzahl, Erzeugen einer Zugangsadresse eines Rotationskoeffizienten entsprechend einer Position eines wertigen Bits mit einem Höchstgewicht in der Binärzahl, und Auswählen eines dazugehörigen Rotationskoeffizienten aus einer Rotationskoeffiziententabelle auf Grundlage der Zugangsadresse;
   Abbilden einer ersten K-Bit-Verschlüsselungscodefolge auf eine 2K-Bit-Verschlüsselungscodefolge, Berechnen der abgebildeten Verschlüsselungscodefolge anhand des Rotationskoeffizienten, um eine rotierte Verschlüsselungscodefolge zu erhalten, wobei K eine positive ganze Zahl ist;
   Aktualisieren des wertigen Bits, das gerade das Höchstgewicht hat, auf null, wenn eine aktualisierte Phasenverschiebung null ist, Ausgeben der rotierten Verschlüsselungscodefolge, wenn die aktualisierte Phasenverschiebung nicht null ist, Heranziehen der aktualisierten Phasenverschiebung als eine aktuelle Eingangsphasenverschiebung, und Heranziehen der rotierten Verschlüsselungscodefolge als die erste Verschlüsselungscodefolge und Wiederholen der oben genannten Vorgänge.

2. Verfahren nach Anspruch 1, wobei, vor dem Auswählen des entsprechenden Rotationskoeffizienten aus der Rotationskoeffiziententabelle entsprechend der Adresse, das Verfahren ferner Folgendes umfasst:

   Ableiten eines Rotationskoeffizienten des Verschlüsselungscodes um die n-te Potenz von 2 und Speichern des Rotationskoeffizienten in der Rotationskoeffiziententabelle.

3. Verfahren nach Anspruch 1, wobei das Berechnen der abgebildeten Verschlüsselungscodefolge anhand des Rotationskoeffizienten, um eine rotierte Verschlüsselungscodefolge zu erhalten, Folgendes umfasst:

   Teilen der abgebildeten 2K-Bit-Verschlüsselungsfolge in K-Mengen und Multiplizieren und Addieren der K-Mengen von Verschlüsselungscodefolgen mit dem Rotationskoeffizienten, um eine rotierte Verschlüsselungsfolge zu erhalten.

**4.** Verfahren nach einem der Ansprüche 1 bis 3, wobei K bevorzugt 25 ist.

**5.** Vorrichtung zur Erzeugung eines Verschlüsselungscodes, umfassend:

einen Adressgenerator, der konfiguriert ist, um: eine Zugangsadresse eines Rotationskoeffizienten entsprechend einer Position eines wertigen Bits zu erzeugen, das gerade ein Höchstgewicht in einer Binärzahl hat, die aus einer aktuellen Phasenverschiebung umgewandelt wird;

ein Rotationskoeffizienten-Verarbeitungsmodul, das konfiguriert ist, um: eine Rotationskoeffiziententabelle zu speichern, die Rotationskoeffizienten enthält, und einen entsprechenden Rotationskoeffizienten aus der Rotationskoeffiziententabelle entsprechend der Zugangsadresse auszuwählen, die vom Adressengenerator erzeugt wurde;

einen ersten Verschlüsselungscodepuffer, der konfiguriert ist, um: eine erste Verschlüsselungscodefolge und eine rotierte Verschlüsselungscodefolge zu puffern;

einen Abbildungsoperator, der konfiguriert ist, um: eine erste K-Bit-Verschlüsselungscodefolge abzubilden, die im ersten Verschlüsselungscodepuffer zwischengespeichert ist, auf eine 2K-Bit-Verschlüsselungscodefolge, die abgebildete Verschlüsselungscodefolge anhand der Rotationskoeffizientenausgabe mithilfe des Rotationskoeffizentenverarbeitungsmodul zu berechnen, um eine rotierte Verschlüsselungscodefolge zur Ausgabe zu erhalten, wobei K eine positive ganze Zahl ist;

einen Verschlüsselungscodepuffer, der konfiguriert ist, um: die rotierte Verschlüsselungscodefolgeausgabe mithilfe des Abbildungsoperators zwischenzuspeichern;

ein die Rotation beendendes Beurteilungsmodul, das konfiguriert ist, um: zu beurteilen, ob eine Anzahl von Zugriffen auf das Rotationskoeffizientenverarbeitungsmodul eine Anzahl von Bits ungleich null in einer Binärzahl erreicht, die aus einer ersten Eingangsphasenverschiebung umgewandelt wird, oder nicht, wenn dies nicht erreicht wird, einen ersten vorgegebenen Wert an einen Wähler auszugeben; wenn dies erreicht wird, einen zweiten vorgegebenen Wert an den Wähler auszugeben;

einen Wähler, der konfiguriert ist, um: die erste vorgegebene Werteingabe vom rotationsbeendenden Beurteilungsmodul zu empfangen, und die rotierte Verschlüsselungscodefolge auszugeben, die aus dem Verschlüsselungscodepuffer entsprechend des ersten vorgegebenen Werts kommt; oder die zweite vorgegebene Werteingabe vom rotationsbeendenden Beurteilungsmodul zu empfangen, und die rotierte Verschlüsselungscodefolge auszugeben, die vom Verschlüsselungscodepuffer entsprechend des zweiten vorgegebenen Werts kommt.

**6.** Vorrichtung nach Anspruch 5, wobei der Rotationskoeffizient ein um die n-te Potenz von 2 abgeleiteter Rotationskoeffizient ist.

**7.** Vorrichtung nach Anspruch 5, wobei K bevorzugt 25 ist.

**8.** Vorrichtung nach Anspruch 5, wobei die Anzahl der Rotationskoeffizienten, die in der Rotationskoeffiziententabelle gespeichert sind, entsprechend der maximalen Anzahl an Bits der Phasenverschiebung ermittelt wird.

**9.** Vorrichtung zur Verarbeitung eines Verschlüsselungscodes, umfassend eine Vorrichtung zur Erzeugung eines Verschlüsselungscodes, einen Zweigwähler, der mit der Vorrichtung zur Erzeugung eines Verschlüsselungscodes verbunden ist, wobei die Vorrichtung zur Erzeugung eines Verschlüsselungscodes die Vorrichtung aus einem der vorangegangenen Ansprüche 5 bis 8 verwendet.

**10.** Vorrichtung nach Anspruch 9, wobei, wenn der Generator eines Protokollverschlüsselungscodes ein Interferenzunterdrückungs-Verschlüsselungscodegenerator ist, ein Vorwärtsrotationskoeffizient als Rotationskoeffizient verwendet wird.

**Revendications**

**1.** Procédé de génération de codes de brouillage consistant à:

transformer un décalage de phase d'entrée en nombre binaire, générer une adresse d'accès d'un coefficient de rotation selon une position d'un bit significatif avec un poids maximal dans le nombre binaire, et sélectionner un coefficient de rotation correspondant à partir d'une table de coefficients de rotation en fonction de l'adresse d'accès;

cartographier une séquence de code de brouillage initiale de K-bits en séquence de code de brouillage de 2K-bits, calculer la séquence de code de brouillage cartographiée avec le coefficient de rotation pour obtenir une séquence de code de brouillage tournée, où K est un entier positif;

mettre à jour de bit significatif actuel avec le poids maximal à zéro, si un décalage de phase mis à jour est nul, générer la séquence de code de brouillage tournée, si le décalage de phase mis à jour n'est pas nul, considérer le décalage de phase mis à jour comme décalage de phase d'entrée actuel, puis considérer la séquence de code de brouillage tournée comme séquence de code de brouillage initiale et répéter les procédures mentionnées ci-dessus.

2. Procédé selon la revendication 1, où,
avant de sélectionner le coefficient de rotation correspondant à partir de la table de coefficients de rotation en fonction de l'adresse, le procédé consiste en outre à:

dériver un coefficient de rotation du code de brouillage par la n-ième puissance de 2, et stocker le coefficient de rotation dans la table des coefficients de rotation.

3. Procédé selon la revendication 1, où,
le calcul de la séquence de code de brouillage cartographiée avec le coefficient de rotation pour obtenir une séquence de code de brouillage tournée, consiste:

à diviser la séquence de brouillage à 2 K-bits cartographiée en K ensembles, puis à multiplier et ajouter les K ensembles de séquences de code de brouillage avec le coefficient de rotation pour obtenir une séquence de brouillage tournée.

4. Procédé selon l'une quelconque des revendications 1 à 3, où,
ledit K est de préférence 25.

5. Appareil de génération de codes de brouillage comprenant:

un générateur d'adresses, qui est configuré pour : générer une adresse d'accès d'un coefficient de rotation conformément à une position de bit significatif actuellement avec un poids maximual en nombre binaire transformé à partir d'un décalage de phase actuel;

un module de traitement de coefficient de rotation, configuré pour : stocker une table de coefficients de rotation contenant des coefficients de rotation, et sélectionner un coefficient de rotation correspondant à partir de la table de coefficients de rotation en fonction de l'adresse d'accès générée par le générateur d'adresses pour produire;

un tampon de code de brouillage initial, configuré pour : mémoriser une séquence de code de brouillage initiale et une séquence de code de brouillage tournée;

un opérateur de cartographie, configuré pour : cartographier une séquence de code de brouillage initiale de K-bits mémorisée dans le tampon de code de brouillage initial sur une séquence de code de brouillage de 2K-bits, calculer la séquence de code de brouillage cartographiée avec le coefficient de rotation généré par le module de traitement de coefficient de rotation pour obtenir une séquence de code de brouillage à générer, où K est un nombre entier positif;

un tampon de code de brouillage, configuré pour : mémoriser la séquence de code de brouillage tournée produite par l'opérateur de cartographie;

un module de détermination de fin de rotation, configuré pour: déterminer si après un certain nombre d'accès le module de traitement de coefficient de rotation atteint un certain nombre de bits différents de zéro dans un nombre binaire transformé à partir d'un premier décalage de phase d'entrée ou non, si la réponse est négative, produire une première valeur prédéterminée à destination du sélecteur; si la réponse est positive, produire une seconde valeur prédéterminée à destination du sélecteur;

un sélecteur, configuré pour : recevoir la première valeur prédéterminée saisie par le module de détermination de fin de rotation, et produire la séquence de code de brouillage tournée provenant du tampon de code de brouillage vers le tampon de code de brouillage initial en fonction de la première valeur prédéterminée; ou bien, recevoir la seconde valeur prédéterminée saisie par le module de détermination de fin de rotation, et produire la séquence de code de brouillage tournée provenant du tampon de code de brouillage en fonction de la seconde valeur prédéterminée.

6. Appareil selon la revendication 5, où,

le coefficient de rotation est un coefficient de rotation dérivé par la n-ième puissance de 2.

7. Appareil selon la revendication 5, où,
ledit K est de préférence 25.

8. Appareil selon la revendication 5, où,
un certain nombre de coefficients de rotation stockés dans la table des coefficients de rotation est déterminé selon un nombre maximal de bits du décalage de phase.

9. Appareil de traitement de code de brouillage, comprenant un appareil de génération de codes de brouillage, un sélecteur de branche connecté à l'appareil de génération de codes de brouillage et un générateur de codes de brouillage de protocole connecté au sélecteur de branche, où,
l'appareil de génération de codes de brouillage utilise l'appareil selon l'une quelconque des revendications 5 à 8.

10. Appareil selon la revendication 9, où,
lorsque le générateur de codes de brouillage de protocole est un générateur de codes de brouillage avec annulation des interférences, on utilise comme coefficient de rotation un coefficient de rotation vers l'avant.

FIG. 1

The number of iterations is equal to the total number of "1"s of the binary number of the input offset

FIG. 2

Initial
scrambling
code      X and Y
         sequence
         selection  Rotation
                    coefficient loading

                    Offset

Scrambling code rapid
deflection apparatus

Selection path control
signal configured externally

Scrambling code generator

Descrambling code generator

Interference cancellation
scrambling code generator

FIG. 3

24

2 1 0

4948

25

FIG. 4

Mapped scrambling
code value

49                    24                    21 0

Rotation coefficient

Binary
multiplication
and summation

FIG. 5

REFERENCES CITED IN THE DESCRIPTION

**Patent documents cited in the description**

- EP 1055996 A2